# EUROPEAN PATENT APPLICATION

(11) **EP 0 577 360 A1**
(43) Date of publication of application: **05.01.1994**
(21) Application number: 93305017.1
(22) Date of filing: 28.06.1993
(51) Int. Cl.: F16P 3/10, E05B 65/00, F16P 3/08

(54) **Emergency release**

(30) Priority: 30.06.1992 GB 9213880
(71) Applicant: FORTRESS INTERLOCKS LIMITED, Wolverhampton, West Midlands WV4 6NT (GB)
(72) Inventor: Bailey, Simon, Walsall, West Midlands WS3 3XA (GB); Stubbs, Timothy Christopher, Selly Oak, Birmingham (GB)
(74) Representative: Gillam, Francis Cyril

(57) **Abstract**

A machine guard (12) movable between a closed position and an open position has a lock mechanism (17) arranged to hold the guard in its closed position. The lock mechanism has an operating member movable to release the guard, from outside the guarded area. Within the guarded area, there is provided an emergency release (20) including a release button (21) which may be depressed in order to release the lock mechanism (17) under emergency conditions, rapidly to exit the guarded area. The button (21) is hollow and has an internal camming surface (35) which acts on a latch plate (30), a plunger (26) passing through an aperture in the latch plate and having an annular groove (31) in which an edge of the plate is received. A spring (28) is arranged to urge the plunger, once released from the latch plate, with a sufficient force to effect release of the operating member. Rapid release of the guard in an assured manner may be achieved from within the guarded area by depressing the emergency release button (21), without the need to go through a full shut-down and lock-release cycle.

## Description

This invention relates to an emergency release for a machine guard, as well as to a machine guard whenever equipped with such an emergency release.

In manufacturing industries, it is a common practice to provide automatic machinery with guards, so as to prevent an operator gaining access to the moving parts of the machinery when in operation. Such guards may be relatively simple and be provided with mechanical locks to prevent unauthorised or inadvertent removal of the guards, or the guards may be linked to a control system for the machinery, so that should the guards be moved from their closed positions, operation of the machinery is automatically suspended.

Individual machines are commonly protected by means of so-called proximity guards, which serve to restrict access just to the moving parts of the machine. However, complex engineering components such as parts of engines are increasingly being made on a transfer line having a number of separate machining stations, with the component being transferred automatically from one station to the next. In the case of a transfer line, it is a common practice to provide so-called perimeter guards which surround the entire transfer line, to prevent access to any part of that line. Since perimeter guards enclose a relatively large area, it is possible for a person to be trapped inadvertently within that area, when the guards are closed to commence the operation of the line. As this possibility has been recognised, an emergency shut-off is normally provided within the guarded area, to stop operation of the machinery within the area bound by the perimeter guards. Also, it is advantageous to provide an emergency exit through the guards for a person trapped within the guarded area.

It is a principal object of the present invention to provide an emergency release for a machine guard provided with an externally-operable lock mechanism, which emergency release allows the guard to be opened without going through the normal release procedures for lock mechanism, and which emergency release is intended ordinarily to be located within the area guarded by the machine guard.

According to a first aspect of the present invention, there is provided an emergency release for a machine guard movable between open and closed positions and a releasable lock mechanism arranged to hold the guard in its closed position, which lock mechanism has an operating member movable to free the holding of the guard in its closed position, which emergency is operable from within the guarded area to free the guard from its closed position, the emergency release being characterised by a plunger operatively associated with the lock mechanism release member and movable from a latched position to a release position where the plunger has operated the release member, spring means urging the plunger with sufficient force to operate the release member when the plunger is released from its latched position, and an emergency release button arranged when depressed to release the plunger from its latched position.

It will be appreciated that the emergency release of this invention is intended to be fitted to the inside of a machine guard, so as to permit the release of that machine guard by a person within the area protected by the guard and who would not therefore ordinarily have access to the lock mechanism which locks the machine guard closed. Moreover, the emergency release is very simple and fast to operate, so assisting the escape of a person trapped within the protected area. However, it would be possible for certain purposes to fit the emergency release to the outside of a guard protecting a machine, in the event that it might be necessary for an operator to gain access within a protected area without going through normal shut-down procedures.

It is most important that the emergency release of this invention is able to operate reliably and quickly, when needed, even though the release may not have been operated for a very long period, other than perhaps for test purposes. To this end, there may be a latch member engageable with the plunger to restrain the plunger in its latched position, the emergency release button being engageable with the latch member upon depression of the button, directly to move the latch member so as thereby to release the plunger. In a preferred embodiment, the plunger has an annular groove and the latch member includes a plate-like portion having an aperture through which the plunger extends, the latch member being slidably mounted to permit an edge of the plate-like portion defining the aperture to be received in and released from the groove in the plunger. A camming surface may be provided on the button, to move the latch member.

The emergency button is preferably relatively large and brightly coloured so as to draw the attention of a trapped person to it. Such a button may be cylindrical and mounted co-axially with the plunger, the button having a camming surface formed internally around its inner surface, to release the latch member associated with the plunger.

A compression spring is conveniently provided to drive the plunger when released from its latched position, so as thereby to operate the operating member of the lock mechanism. Should the compression spring not provide sufficient force to release the lock mechanism, for whatever reason, it is preferred for the emergency release button to have an end face which normally is spaced from the adjacent end of the plunger, but which upon depression of the button and following release of the plunger from its latched position engages the end of the plunger. Thus, continued pressure on the release button will thrust the plunger forwardly, and so release the lock mechanism. However, for "normal" operation, the spring force should be more than sufficient to release the lock mechanism without assistance from pressure on the emergency release button.

According to a second aspect of the present invention, there is provided a machine guard movable between a closed position and an open position and having a lock mechanism arranged to restrain the guard in the closed position, which lock mechanism is provided with an operating member arranged to release the guard from its closed position, in combination with an emergency release of this invention as described above and operable from within the guarded area, to release the lock mechanism and so permit the guard to be moved from its closed position.

The guard itself may be movable between its open and closed positions by sliding movement generally in its own plane, or the guard may be hindgedly mounted and so movable between its open and closed positions by pivoting movement. Though the emergency release of this invention can be fitted to a sliding guard, it is much preferred for it to be used on a pivoted guard, and for the guard to pivot outwardly of the protected area, when it is to be moved to its open position. In this way, an operator trapped within the protected area and wishing to escape therefrom need do no more than hit the emergency release button whilst moving away from the machinery, so allowing the guard to be unlocked and opened, allowing the operator to escape.

By way of example only, one specific embodiment of this invention will now be described in detail, in which:-
Figure 1 is a general perspective view of a pivoted machine guard fitted with a lock mechanism and an emergency release of this invention;
Figure 2 is a longitudinal sectional view through the embodiment of emergency release of this invention; and
Figure 3 is a sectional view taken through the emergency release, on line III-III marked on Figure 2.

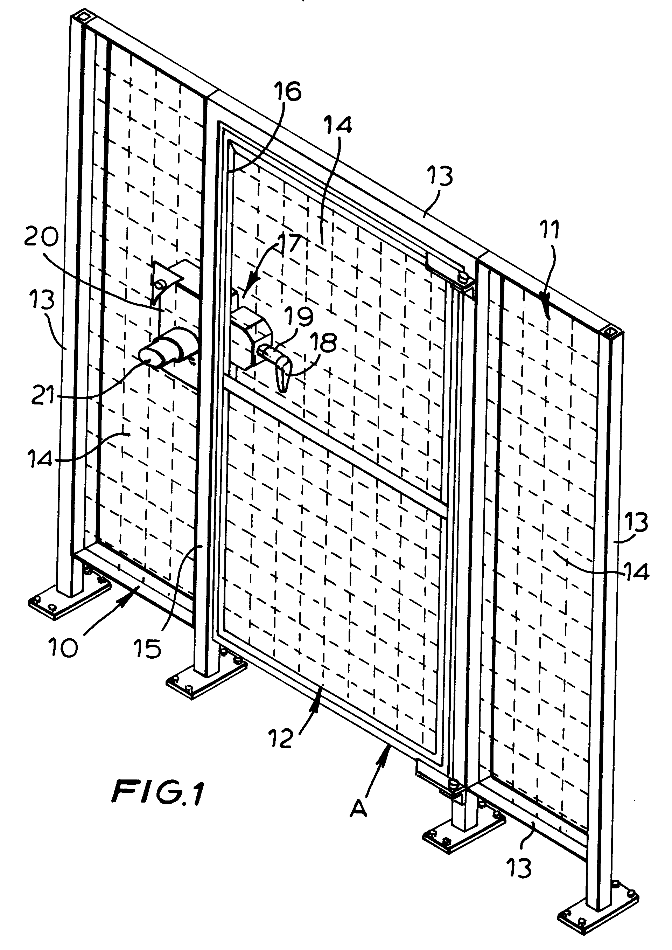

Figure 1 shows a part of a perimeter guard suitable for protecting for example a transfer line used for machining complex engineering components. This guard comprises two fixed panels 10 and 11 between which is mounted a door panel 12 which, in the arrangement shown in the drawing, may swing open in the direction of arrow A. Each panel comprises a welded steel frame 13, to which is secured welded wire mesh 14.

The adjacent frame elements 15 and 16 of a fixed panel 10 and the door panel 12 respectively are provided with the two parts respectively of a lock mechanism 17, adapted to secure the door panel 12 in its illustrated closed position, when locked. The part of the lock mechanism on the door panel includes a handle 18 connected to a rotatable operating member 19, co-operable with a part of the lock mechanism (not shown) provided within a casing 20 mounted on the frame element 16 of the fixed panel. The casing 20 supports an emergency release button 21, operable from the other side of the door panel 12 from the handle 18, to release the lock mechanism in an emergency and so allow the door panel 12 to swing to the open position.

The casing 20 includes appropriate switch gear which controls the operation of machinery guarded by the panels 10, 11 and 12. Only when the door panel has been locked closed is operation of the machinery permitted.

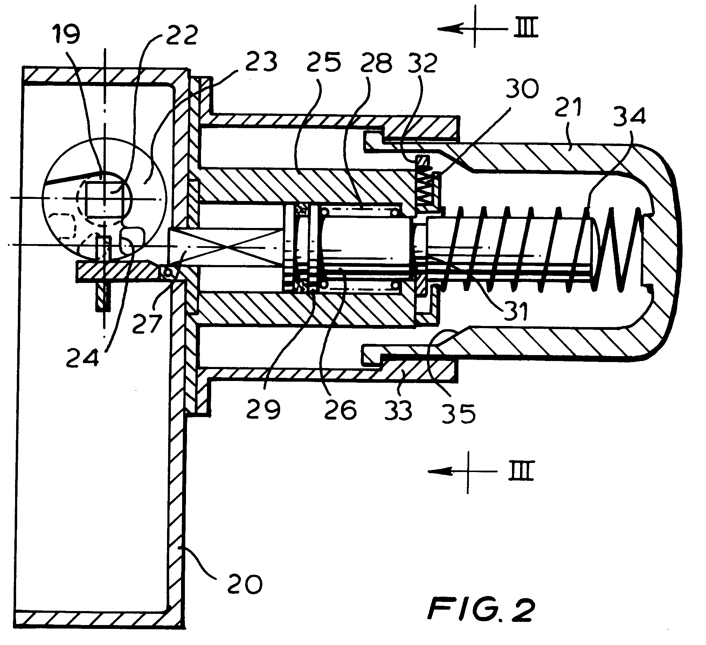

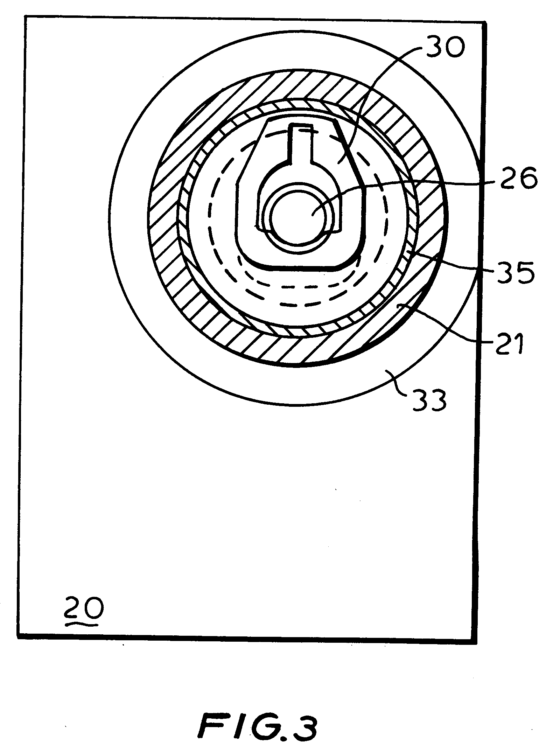

Figures 2 and 3 show the emergency release for the lock mechanism 17, in greater detail. The operating member 19 includes a square shank 22 on which is mounted a lever arm 23 having an abutment face 24. The casing 20 supports a boss 25 in which is slidably mounted a plunger 26 disposed so that the forward end 27 of the plunger may engage the abutment face 24 of the lever arm 23, and rotate the operating member 19. A compression spring 28 is disposed within the boss 25 and engages a flange 29 on the plunger, to drive the plunger forwardly and effect rotation of the operating member 19.

The plunger 26 is latched in the withdrawn position illustrated in Figure 1 by means of the inter-engagement between a latch-plate 30 and an annular groove 31 formed in the plunger. The latch plate 30 has an aperture through which the plunger extends, an edge of the plate defining the aperture being receivable in the groove 31 in the plunger 26. The latch plate 30 is mounted on the boss 25 for sliding movement transverse to the axis of the plunger 26 and has a lug 32 which projects beyond the periphery of the boss 25.

The emergency release button 21 is arranged co-axially with the plunger 26 by means of a sleeve 33 which is mounted on the casing 20. A further spring 34 biases the emergency release button 21 to the position illustrated in Figure 2, away from the plunger 26. Formed internally within the button is an annular camming surface 35 which, on depression of the button towards the casing 20, engages the lug 32 of the latch-plate 30 and moves the latch plate to come free of the groove 31 in the plunger 26. This releases the plunger, which is then driven forwardly by the compression spring 28, to release the lock mechanism 17.

When the emergency release is in the "normal" position illustrated in Figure 2, there is a clearance between the end 36 of the plunger 26 and the inner end of the emergency release button 21. This clearance should be slightly greater than the axial movement which the emergency release button 21 has to perform, in order to release the latch-plate 30 from the groove 31 in the plunger 26. Then, and in the event that the compression spring 28 has, for any reason, insufficient force to rotate the lock mechanism operating member 19, continued pressure on the emergency release button 21 will drive the plunger 26, so forcing the rotation of the operating member 19.

It will be appreciated that once the emergency release has been operated, it cannot easily be re-set. Thus, the fact that it was necessary for the emergency release to be operated will come to the attention of the management of a plant, so enabling the appropriate enquiries to be made, as to why someone was trapped on the wrong side of the guards. Re-setting of the emergency release is possible only by pushing the plunger 26 back to the position illustrated in Figure 2, and then lifting the latch plate with an appropriate tool. Access for this has to be obtained through openings (not shown) in the casing 20, following removal of a cover plate (not shown) for that casing.

## Claims

1. An emergency release for a machine guard movable between open and closed positions and having a releasable lock mechanism arranged to hold the guard in its closed position, which lock mechanism has an operating member movable to free the holding of the guard in its closed position, which emergency release is operable from within the guarded area to free the guard from its closed position, characterised in that the emergency release comprises a plunger (26) operatively associated with the lock mechanism release member (19) and movable from a latched position (Figure 2) to a release position where the plunger has operated the release member, spring means (28) urging the plunger (26) with sufficient force to operate the release member (22) when the plunger is released from its latched position, and an emergency release button (21) arranged when depressed to release the plunger (26) from its latched position.

2. An emergency release according to Claim 1, characterised in that there is provided a latch member (30) engageable with the plunger (26) to restrain the plunger in its latched position, the emergency release button (21) being engageable with the latch member (30) upon depression of said button to move the latch member so as thereby to release the plunger (26).

3. An emergency release according to Claim 2, further characterised in that the plunger (26) has an annular groove (31) and the latch member (30) includes a plate-like portion having an aperture through which the plunger extends, the latch member being slidably mounted to permit an edge of the plate-like portion defining the aperture to be received in and released from the groove in the plunger.

4. An emergency release according to Claim 3, characterised in that the emergency release button (21) includes a camming surface (35) which moves the latch member (30) upon depression of the button, to release the plunger.

5. An emergency release according to any of the preceding Claims, characterised in that the emergency release button (21) and the plunger (26) are both mounted for sliding movement about parallel or coincident axes, and the button (21) is preferably cylindrical and surrounds the plunger (26).

6. An emergency release according to Claim 4 and Claim 5, characterised in that said camming surface (35) is formed internally around the inner surface of the button (21).

7. An emergency release according to Claim 5 or Claim 6, characterised in that the button (21) has an end face which normally is spaced from the adjacent end of the plunger (26) but which upon depression of the button and following release of the plunger from its latched position engages the end of the plunger for subsequent simultaneous movement therewith.

8. An emergency release according to any of the preceding Claims, characterised in that the button (21) is spring-urged (34) towards the position from which the button is depressed to release the lock mechanism.

9. An emergency release according to any of the preceding Claims, characterised in that the operating member (19) of the lock mechanism is rotatable and the plunger (26) is arranged to strike an arm (24) or lever connected to the operating member to effect rotation thereof.

10. A machine guard (12) movable between a closed position and an open position and having a releasable lock mechanism (17) arranged to restrain the guard in the closed position which lock mechanism is provided with an operating member arranged to release the guard from its closed position, in combination with an emergency release (20,21) according to any of the preceding Claims and operable from within the guarded area to release the lock mechanism and permit the guard (13) to be moved from its closed position.
